(19) Europäisches Patentamt
European Patent Office
Office européen des brevets

(11) Veröffentlichungsnummer : **0 144 565**
**B1**

(12) # EUROPÄISCHE PATENTSCHRIFT

(45) Veröffentlichungstag der Patentschrift : **25.03.87**

(21) Anmeldenummer : **84110794.9**

(22) Anmeldetag : **11.09.84**

(51) Int. Cl.[4] : **C 22 B 11/04**, C 01 G 5/00, C 01 G 7/00, C 01 G 55/00, C 22 B 3/00

(54) **Verfahren zur Abtrennung und Reinigung der Platingruppenmetalle.**

(30) Priorität : **05.11.83 DE 3340055**

(43) Veröffentlichungstag der Anmeldung : **19.06.85 Patentblatt 85/25**

(45) Bekanntmachung des Hinweises auf die Patenterteilung : **25.03.87 Patentblatt 87/13**

(84) Benannte Vertragsstaaten : **AT BE CH DE FR GB IT LI LU NL SE**

(56) Entgegenhaltungen :
**US-A- 4 368 073**
**CHEMICAL ABSTRACTS, Band 83, 1975, Seite 791, Nr. 125678x, COLUMBUS,OHIO,(US). Y. YAGI: "Analytical chemical studies of thiourea derivatives. 2. Spectrophotometric determination of palladium with a new chelating reagent, 1-methyl-3-(4-methyl-2-thiazolyl) thiourea"**
**CHEMICAL ABSTRACTS, Band 80, 1974, Seite 522, Nr. 115655m, COLUMBUS,OHIO,(US). E.A. Jones: "Use od DDTU (N,N'-diphenyl-S-(1-decyl)isothiourea) as an analytical reagent for the noble metals"**
**CHEMICAL ABSTRACTS, Band 97, 1982, Seite 775, Nr. 174070r, COLUMBUS,OHIO,(US). R. YODA: "Spectrophotometric determination of palladium with a new chelating reagent, N,N-dimethyl-N'-(4-methyl-4-nitro-2-thiazolyl)thiourea"**
**CHEMICAL ABSTRACTS, Band 95, 1981, Seite 729, Nr. 17504b, COLUMBUS,OHIO,(US). R. YODA: "Spectrophotometric determination of palladium (II) with a new chelating reagent, N,N-dimethyl-N'-(4-phenyl-2-thiazolyl)thiourea"**

(73) Patentinhaber : **Degussa Aktiengesellschaft**
**Weissfrauenstrasse 9**
**D-6000 Frankfurt am Main 1 (DE)**

(72) Erfinder : **König, Karl-Heinz, Dr. Prof.**
**Kirchhainer Strasse 13**
**D-6000 Frankfurt am Main 50 (DE)**
Erfinder : **Schuster, Michael, Dipl.-Chem.**
**Haintalstrasse 20**
**D-6000 Frankfurt-Harheim (DE)**
Erfinder : **Schneeweis, Gerd, Dr. Dipl.-Chem.**
**Merianstrasse 16**
**D-5160 Düren (DE)**
Erfinder : **Steinbrech, Bernd. Dr. Dipl.-Chem.**
**Krummauer Strasse 1**
**D-6000 Frankfurt am Main 60 (DE)**
Erfinder : **Schlodder, Rainer, Dr. Dipl.-Chem.**
**Ulmenstrasse 63**
**D-6458 Rodenbach 1 (DE)**

**EP 0 144 565 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Abtrennung und Reinigung der Platingruppenmetalle von Unedelmetallen und zur Trennung der Platingruppenmetalle voneinander aus wässrigen, sauren Lösungen mittels eines organischen Extraktionsmittels in einem mit Wasser nichtmischbaren Lösungsmittel.

Die derzeit bekannten Verfahren zur Abtrennung und Reinigung der Platingruppenmetalle Platin, Palladium, Rhodium, Ruthenium, Iridium, Osmium aus sauren wässrigen Lösungen, die auch Unedelmetalle enthalten, benötigen eine große Zahl von einzelnen Verfahrensschritten und sind sehr zeitaufwendig. Außerdem wachsen die Schwierigkeiten der bekannten Aufarbeitungsverfahren mit der Zahl der abzutrennenden Platinmetalle und der übrigen anwesenden Edel- und Nichtedelmetalle, wie Kupfer, Eisen, Nickel, Kobalt, Zink oder Mangan.

Bekannte Verfahren arbeiten zum Teil mit organischen Fällungs- und Extraktionsmitteln, wie z. B. Mercaptopyridin-N-oxid (US-PS 43 68 073) oder N,N'-Diphenyl-S-(I-Dezyl) thioharnstoff (S. Chemical Abstracts, Band 80, 1974, Seite 522, Nr. 115655 m), doch sind diese Reagenzien oft wenig spezifisch oder nicht generell für alle Platinmetalle einsetzbar.

Es war daher die Aufgabe der vorliegenden Erfindung, ein Verfahren zur Abtrennung und Reinigung der Platingruppenmetalle von übrigen Edel- und Nichtedelmetallen und der Platingruppenmetalle voneinander aus wässrigen, sauren Lösungen mittels eines organischen Extraktionsmittels in einem mit Wasser nicht mischbaren Lösungsmittel zu schaffen, mit dem sich auf einfache Weise möglichst quantitativ alle Platinmetalle abtrennen und reinigen lassen.

Diese Aufgabe wurde erfindungsgemäß dadurch gelöst, daß als Extraktionsmittel ein substituierter Thioharnstoff der allgemeinen Formel

$$R_1R_2N—CS—NH—CO—R_3$$

oder

$$R_1R_2N—CS—NH—COOR_3,$$

wobei $R_1$, $R_2$ und $R_3$ = substituierte oder unsubstituierte Alkyl-, Aryl- oder Aralkylgruppen bedeuten, bei einem pH-Wert kleiner als 4 und bei Temperaturen zwischen 15 und 100 °C eingesetzt wird.

Vorzugsweise verwendet man einen Thioharnstoff, bei dem $R_1$ und $R_2$ aus je einer Methyl-, n-Butyl- oder n-Hexylgruppe und $R_3$ aus einer Phenylgruppe bestehen. Diese N,N-Dialkyl-N'-benzoylthioharnstoffe lassen sich leicht aus den entsprechenden sekundären Aminen, Benzoylchlorid und Kaliumthiocyanat herstellen.

Bei der Verwendung von N,N-Dialkyl-N'-carbalkoxythioharnstoffen besteht $R_3$ vorzugsweise aus einer Methyl- oder Äthylgruppe. Die Synthese erfolgt aus den entsprechenden sekundären Aminen, Chlorameisensäureester und Kaliumthiocanat. Als Lösungsmittel dienen aliphatische und/oder aromatische Verbindungen, vorzugsweise Xylol, Chloroform oder Toluol.

Vorzugsweise extrahiert man die Platinmetalle aus salzsauren Lösungen, wobei das Extraktionsmittel im stöchiometrischen Überschuß zugesetzt wird. Dabei geht man von einer Komplexbildungsreaktion beispielsweise der Form $Me^{2+} + 2\ DMBT \rightarrow Me\ (DMBT)_2 + 2H^+$ aus (DMBT = N,N-Dimethyl-N'-benzoylthioharnstoff). Das Extraktionsmittel ist sehr stabil gegen Hydrolyse und Oxidation, außerdem besitzt es nur eine sehr geringe Löslichkeit in sauren wässrigen Lösungen, so daß bei der Extraktion kein Extraktionsmittel verloren geht. Man bekommt eine schnelle Gleichgewichtseinstellung und hohe Verteilungskoeffizienten.

Die abgetrennten Platinmetalle können aus der organischen Phase nach bekannten Verfahren wiedergewonnen und auch voneinander getrennt werden.

Je nach Zusammensetzung der sauren Lösungen können durch Wahl des pH-Wertes und der Temperatur auch einzelne Platinmetalle spezifisch von anderen abgetrennt werden. So bildet z. B. Palladium einen sehr stabilen Komplex mit DMBT, so daß es aus 3 bis 6 m salzsaurer Lösung von allen übrigen Edel- und Nichtedelmetallen abgetrennt werden kann. Andererseits erfolgt beim Iridium beispielsweise bei pH-Werten von 2-4 die Bildung des DMBT-Komplexes erst bei Temperaturen von 80 bis 100 °C, während die übrigen Platinmetalle schon unterhalb 60 °C die entsprechenden Komplexverbindungen bilden, so daß auch Iridium von allen übrigen Metallen quantitativ und spezifisch abgetrennt werden kann.

Folgende Tabelle zeigt die pH-Bereiche, in denen einige der entsprechenden Metallchelate extrahiert werden können, gültig für den N,N-Dimethyl-N'-benzoylthioharnstoff (DMBT) bei Metallkonzentrationen von $10^{-2}$ mol/l.

Aus diesen Werten lassen sich die jeweiligen abtrennungsparameter für ein vorgegebenes Lösungsgemisch auswählen.

(Siehe Tabelle Seite 3 f.)

| Metall | pH-Bereich Extraktion | Temperatur (°C) |
|---|---|---|
| $Pt^{II}$ | 2 - 4 | 20 |
| $Pt^{IV}$ | 2 - 4 | 60 |
| $Pd^{II}$ | 6m HCl | 20 |
| $Ru^{III}$ | 2 - 4 | 60 |
| $Rh^{III}$ | 2 - 4 | 60 |
| $Os^{III}$ | 2 - 4 | 60 |
| $Ir^{III}$ | 2 - 4 | 80 - 100 |
| $Ag^{I}$ | 2 - 4 | 20 |
| $Cu^{II}$ | 0 - 2 | 20 |
| $Co^{III}$ | 6 - 7 | |
| $Ni^{II}$ | 5 - 7 | |
| $Zn^{II}$ | 5 - 7 | |

Auch die übrigen komplexierbaren Unedelmetalle, wie z. B. Blei oder Kadmium, werden erst bei pH-Werten oberhalb 4 gefällt bzw. extrahiert. Eisen bildet in salzsaurer Lösung mit DMBT keinen extrahierbaren Komplex. In hohen Konzentrationen und bei Anwesenheit anderer Metalle wird es jedoch in geringen Mengen mitextrahiert, ist aber durch Waschen der organischen Phase mit 3 molarer Schwefelsäure leicht zu entfernen. N,N-Di-n-butyl und N,N-Di-n-hexylbenzoylthioharnstoff extrahieren Eisen in wesentlich stärkerem Maße ; die organischen Phasen lassen sich jedoch durch Waschen mit 3 molarer Schwefelsäure ebenfalls leicht von mitextrahiertem Eisen befreien.

Folgende Beispiele sollen das erfindungsgemäße Verfahren näher erläutern :

1. 50 ml einer 3 molar salzsauren Lösung der Zusammensetzung 2,0 g/l Pt, 1,8 g/l Pd, 0,5 g/l Rh, 0,8 g/l Ir, 0,05 g/l Ru, 0,05 g/l Os, 0,6 g/l Cu, 1,8 g/l Fe, 1,0 g/l Ni, 0,6 g/l Zn, 0,4 g/l Co und 0,2 g/l Mn wurden durch Zugabe von verdünnter NaOH unter starkem Rühren auf pH 2,5 gestellt. N,N-Di-n-hexyl-N'-benzoylthioharnstoff (DHBT) wurde in Xylol gelöst, die Konzentration betrug 20 g/l. Die wässrige Lösung mit pH 2,5 wurde 8 mal mit je 50 ml der DHBT-haltigen Xylol Lösung intensiv geschüttelt. Die Temperatur der Lösung betrug 90 °C.

Die organischen Phasen wurden gesammelt und gemischt. Sie enthielten die gesamten Platinmetalle sowie Kupfer und Eisen, die sich jedoch durch Waschen der organischen Phase mit 3 m Schwefelsäure entfernen lassen. Die wässrige Phase und die zum Waschen eingesetzte Schwefelsäure waren edelmetallfrei.

2. 50 ml der 3 molar salzsauren Lösung gemäß Beispiel 1 wurden 4 mal je 10 Minuten lang mit 50 ml einer thioharnstoffhaltigen Chloroform-Lösung, hergestellt durch Lösen von 20 g N,N-Di-n-butyl-N'-benzoylthioharnstoff (DBBT) in 1 l Chloroform, intensiv geschüttelt. Die Temperatur der Lösungen betrug 25 °C. Die organischen Phasen wurden gesammelt und gemischt. Sie enthielten das gesamte Palladium und Spuren von Eisen, die sich jedoch durch Waschen mit 3 m Schwefelsäure entfernen lassen. Andere Metalle waren in der organischen Phase nicht nachweisbar. Der Pd-Gehalt der wässrigen Phase lag unterhalb der analytischen Nachweisgrenze.

3. 50 ml der Lösung von Beispiel 1, die nach Beispiel 2 von Pd befreit war, wurden durch Zugabe von verdünnter Natronlauge unter starkem Rühren auf pH = 1 gestellt und 2 mal je 10 Minuten lang mit je 50 ml einer DBBT-haltigen Chloroform-Lösung (20 g/l) intensiv geschüttelt. Die Temperatur der Lösung betrug 25 °C. Die organischen Phasen wurden gesammelt und gemischt. Sie enthielten das gesamte Kupfer und geringe Mengen Eisen.

Andere Metalle waren in der organischen Lösung nicht nachweisbar. Der Cu-Gehalt der wässrigen Phase lag unterhalb der analytischen Nachweisgrenze.

4. Die wässrige Lösung aus Beispiel 3 wurde durch Zugabe von Natronlauge unter Rühren auf pH = 3 eingestellt, auf 60 °C erhitzt und 6 mal mit je 50 ml einer DHBT-haltigen Toluol-Lösung (20 g/l) jeweils 10 Minuten intensiv geschüttelt. Die organischen Phasen wurden gesammelt und gemischt. Sie enthielten das gesamte Platin, Ruthenium und Osmium, sowie einen Teil des Eisens, das sich aber durch Waschen der organischen Phase mit 3 molarer Schwefelsäure entfernen lässt. Andere Metalle waren in der organischen Lösung nicht nachweisbar.

5. Die wässrige Lösung aus Beispiel 4 wurde 4 mal je 3 Stunden bei 80 °C mit je 30 ml einer DHBT-haltigen Toluol-Lösung (60 g/l) intensiv geschüttelt. Die organischen Phasen wurden gesammelt und gemischt. Sie enthielten das gesamte Rhodium und Iridium und einen Teil des Eisens, das sich durch Waschen der organischen Phase mit 3 molarer Schwefelsäure entfernen lässt. Andere Metalle waren in der organischen Phase nicht nachweisbar.

6. 50 ml einer 3 m salzsauren, wässrigen Lösung mit 30 g/l Platin und 1,5 g/l Pd wurden viermal mit je

50 ml einer Lösung von N,N-Di-n-butyl-N'-benzoylthioharnstoff in Chloroform (20 g/l) jeweils 10 Minuten intensiv geschüttelt, wobei die Temperatur der Lösung 25 °C betrug. Die organischen Phasen enthielten das gesamte Palladium, aber kein Platin, während der Pd-Gehalt in der wässrigen Phase unterhalb der Nachweisgrenze lag.

7. 50 ml einer Lösung gemäß Beispiel 6 wurden viermal mit je 50 ml mit je 50 ml einer 25 °C warmen Lösung von N,N-Di-n-hexyl-N'-carbethoxythioharnstoff in Chloroform (20 g/l) jeweils 10 Minuten intensiv geschüttelt. Auch hier enthielt die organische Phase das gesamte Palladium, die wässrige Phase das Platin.

## Patentansprüche

1. Verfahren zur Abtrennung und Reinigung der Platingruppenmetalle von übrigen Edel- und Nichtedelmetallen und zur Trennung der Platingruppenmetalle voneinander aus wässrigen, sauren Lösungen mittels eines organischen Extraktionsmittels in einem mit Wasser nichtmischbaren Lösungsmittel, dadurch gekennzeichnet, daß als Extraktionsmittel ein substituierter Thioharnstoff der allgemeinen Formel

$$R_1\ R_2\ N—CS—NH—CO—R_3$$

oder

$$R_1\ R_2\ N—CS—NH—COOR_3,$$

wobei $R_1$, $R_2$ und $R_3$ substituierte oder unsubstituierte Alkyl-, Aryl- oder Aralkylgruppen bedeuten, bei einem pH-Wert kleiner als 4 und bei Temperaturen zwischen 15 und 100 °C eingesetzt wird.

2. Verfahren nach Anspruch 1, dadurch gekennzeichnet, daß $R_1$ und $R_2$ je eine Methyl-, n-Butyl- oder n-Hexylgruppe und $R_3$ eine phenylgruppe bzw. bei den Verbindungen $R_1$ $R_2$ N—CS—NH—$COOR_3$ eine Methyl- oder Äthylgruppe bedeuten.

## Claims

1. A process for the separation and purification of the platinum group metals from other noble and non-noble metals and for the division of the platinum group metals from one another from aqueous, acidic solutions by means of an organic extraction agent in a water-immiscible solvent, characterised in that a substituted thiourea corresponding to the general formula

$$R_1\ R_2\ N—CS—NH—CO—R_3$$

or

$$R_1\ R_2\ N—CS—NH—COOR_3,$$

wherein $R_1$, $R_2$ and $R_3$ represent substituted or unsubstituted alkyl, aryl or aralkyl groups is used as extraction agent at a pH lower than 4 and at temperatures of between 15 and 100 °C.

2. A process according to claim 1, characterised in that $R_1$ and $R_2$ each represent a methyl, n-butyl or n-hexyl group and $R_3$ represents a phenyl group or in the compounds $R_1$ $R_2$ N—CS—NH—$COOR_3$ represent a methyl or ethyl group.

## Revendications

1. Procédé pour séparer et purifier des métaux du groupe du platine d'autres métaux nobles ou non, et pour séparer les uns des autres les métaux du groupe du platine, à partir de solutions acides aqueuses, au moyen d'un agent organique d'extraction, dans un solvant non miscible à l'eau, procédé caractérisé en ce que, comme agent d'extraction, on utilise une thio-urée substituée de formule générale :

$$R_1R_2N—CS—NH—CO—R_3$$

ou

$$R_1R_2N—CS—NH—COOR_3$$

où $R_1$, $R_2$ et $R_3$ représentent des groupes alcoyl, aryl, ou aralcoyl, substitués ou non, le pH étant ajusté à une valeur inférieure à 4, et les températures se situant entre 15 et 100 °C.

2. Procédé suivant la revendication 1, caractérisé en ce que $R_1$ et $R_2$ représentent chaque fois un groupe méthyl, n-butyl, ou n-hexyl, et $R_3$ un groupe phényl, ou, dans les composés $R_1$ $R_2$ N—CS—NH—$COOR_3$, un groupe méthyl ou éthyl.